# EUROPÄISCHE PATENTSCHRIFT

(11) **EP 1 730 420 B1**
(45) Veröffentlichungstag und Bekanntmachung des Hinweises auf die Patenterteilung: **17.09.2008**
(21) Anmeldenummer: 05715572.3
(22) Anmeldetag: 26.02.2005
(51) Int. Cl.: F16H 7/12, F02B 67/04

(54) **VERFAHREN UND VORRICHTUNG ZUM VORSPANNEN EINES ZUGMITTELTRIEBS EINER BRENNKRAFTMASCHINE**
METHOD AND DEVICE FOR PRETENSIONING A BELT DRIVE OF AN INTERNAL COMBUSTION ENGINE
PROCEDE ET DISPOSITIF POUR PRECONTRAINDRE UN MECANISME A ELEMENTS DE TRACTION DE MOTEUR A COMBUSTION INTERNE

(30) Priorität: 02.04.2004 DE 102004016353
(43) Veröffentlichungstag der Anmeldung: 13.12.2006
(73) Patentinhaber: Schaeffler KG, 91074 Herzogenaurach (DE)
(72) Erfinder: STIEF, Hermann, 91448 Emskirchen (DE); BOGNER, Michael, 90542 Eckental (DE)
(86) Internationale Anmeldenummer: PCT/EP2005/002045
(87) Internationale Veröffentlichungsnummer: WO 2005/106288

(56) Entgegenhaltungen:
- DE-A1- 10 044 645
- DE-A1- 10 045 143
- DE-A1- 19 849 886

## Beschreibung

### Gebiet der Erfindung

Die Erfindung bezieht sich auf ein Verfahren zum Vorspannen eines Zugmitteltriebs einer Brennkraftmaschine entsprechend dem Oberbegriff des Anspruchs 1, mit einem zumindest die Zugmittelscheibe einer Kurbelwelle und die Zugmittelscheibe eines Starter-Generators verbindenden Zugmittel sowie mit einer auf den Zugtrum des Zugmitteltriebs einwirkenden Spanneinrichtung, wobei bei einem angenommenen Starterbetrieb des Starter-Generators als Zugtrum derjenige Bereich des Zugmittels verstanden wird, welcher in Normaldrehrichtung der Zugmittelscheibe des Starter-Generators gesehen der Zugmittelscheibe vorgelagert ist, und als Leertrum derjenige Bereich des Zugmittels definiert ist, welcher der Zugmittelscheibe dieses Starter-Generators nachgeordnet ist. Die Erfindung betrifft ferner eine Vorrichtung zur Durchführung des Verfahrens entsprechend dem Oberbegriff des Anspruchs 6.

### Hintergrund der Erfindung

Es ist an sich bekannt, an Zugmitteltrieben eine Spanneinrichtung zur Anwendung zu bringen, die beispielsweise aus einer Spannrolle besteht, die ihrerseits federbelastet auf den Zugmitteltrieb wirkt. Diese Spanneinrichtung wirkt überwiegend im Bereich des Leertrums des Zugmitteltriebs, welcher sich während des Betriebes der Brennkraftmaschine einstellt, beziehungsweise welcher in Drehrichtung der Zugmittelscheibe der Kurbelwelle der Brennkraftmaschine gesehen der Zugmittelscheibe der Kurbelwelle nachgeordnet ist.

Durch diese Anordnung der Spanneinrichtung soll gewährleistet werden, dass ausreichend Drehmoment von der Brennkraftmaschine über den Zugmitteltrieb übertragbar ist. Insoweit macht sich eine derartige Spanneinrichtung besonders dann vorteilhaft bemerkbar, wenn neben der Zugmittelscheibe einer Kurbelwelle und der Zugmittelscheibe eines Starter-Generators Zugmittelscheiben von Nebenaggregaten, wie Klimakompressor, Servopumpe u. a., in den Zugmitteltrieb eingebunden sind.

Befindet sich der Zugmitteltrieb im Startbetrieb, bei dem die Brennkraftmaschine mittels des Starter-Generators gestartet wird, so wechselt der vorstehend als Leertrum bezeichnete Zugmitteltrum zu einem Zugtrum, da dieser Bereich des Zugmittels während des Startbetriebs durch die Zugmittelscheibe des Starter-Generators gezogen wird, wobei der dem Starter-Generator nachgeordnete Bereich des Zugmittels in diesem Fall als Leertrum zu bezeichnen ist.

In der Praxis hat sich herausgestellt, dass sich, weil die aktuelle Position der Spanneinrichtung nach dem Abstellen der Brennkraftmaschine infolge der inneren Reibung der Brennkraftmaschine und der Nebenaggregate sowie infolge von Vibrationen der Brennkraftmaschine während des Abstellvorganges nur sehr bedingt vorhersehen lässt, eine schwankende und an den zuvor erfolgten generatorischen Betrieb des Starter-Generators angepasste Vorspannkraft im Zugmittel einstellt. Bringt der Starter-Generator während eines nunmehr folgenden Startvorgangs ein Drehmoment in den Zugmitteltrieb ein, so wird das Zugmittel vornehmlich im Bereich des sich einstellenden Zugtrums elastisch gedehnt und die Vorspannkraft im Leertrum fällt ab.

Gerade für den Startbetrieb muss dieser Abfall der Vorspannkraft im Leertrum, der sich besonders nachteilig bei Riementrieben bemerkbar macht, verhindert werden, um eine ausreichende Drehmomentübertragung insbesondere auf die Zugmittelscheibe der Brennkraftmaschine bewerkstelligen zu können.

Um der vorstehend beschriebenen Problematik zu begegnen, ist es aus der gattungsgemäßen DE 100 45 143 A1 bekannt, den Wechsel des Leertrums und des Zugtrums im Zugmittel mittels einer Spanneinrichtung mit zwei Spannrollen zu begegnen, die in dieser hierin als Riemenscheiben bezeichnet werden. Im wesentlichen sind die beiden Spannrollen miteinander drehstarr verbundenen, jedoch an federbelasteten Hebelarmen angeordnet und ermöglichen nach Art eines sogenannten Pendelspanners ein gleichzeitiges Vorspannen des sich jeweils abhängig vom aktuell anstehenden Betriebsmodus einstellenden Leertrums und Zugtrums.

Sicherlich ist durch diese Maßnahme ein vorteilhafter Effekt hinsichtlich der Verspannung des Zugmitteltriebs zu verzeichnen. Aufgrund der Tatsache, dass die Spanneinrichtung sowohl auf den sich einstellenden Leertrum als auch auf den Zugtrum einwirkt, baut diese relativ groß, welches bei beengten Verhältnissen im Motorraum eines Kraftfahrzeugs zu Problemen führen kann.

### Aufgabe der Erfindung

Der Erfindung liegt die Aufgabe zugrunde, ein Verfahren zum Vorspannen eines Zugmitteltriebs einer Brennkraftmaschine anzugeben, welches mit geringerem maschinentechnischen beziehungsweise mechanischem Aufwand eine Vorspannung des Zugmitteltriebs gewährleistet, wobei insbesondere während eines Starterbetriebs des Starter-Generators ein etwaiger Abfall der Vorspannkraft im Leertrum wirkungsvoll verhindert werden soll. Aufgabe der Erfindung ist es ferner, eine geeignete Vorrichtung zur Durchführung dieses Verfahrens vorzustellen.

### Zusammenfassung der Erfindung

Die Erfindung geht aus von einem Zugmitteltrieb einer Brennkraftmaschine, mit einem zumindest die Zugmittelscheibe einer Kurbelwelle und die Zugmittelscheibe eines Starter-Generators verbindenden Zugmittel, sowie mit einer auf den Zugtrum des Zugmittels einwirkenden Spanneinrichtung, wobei bei einem angenommenen Starterbetrieb des Starter-Generators als Zugtrum der Bereich des Zugmittels verstanden wird, welcher in Normaldrehrichtung der Zugmittelscheibe des Starter-Generators gesehen der Zugmittelscheibe vorgeordnet und als Leertrum der Bereich des Zugmittels definiert wird, welcher der Zugmittelscheibe nachgeordnet ist.

Des Weiteren geht die Erfindung von der Erkenntnis aus, dass die aktuelle Position der Spanneinrichtung nach dem Abstellen der Brennkraftmaschine infolge der inneren Reibung der Brennkraftmaschine und der Nebenaggregate, sowie infolge von Vibrationen der Brennkraftmaschine während ihres Abstellvorganges nur sehr bedingt vorhersehbar ist und sich insofern eine an sich undefinierte, an den generatorischen Betrieb angepasste Vorspannkraft im Zugmittel einstellt.

Erfindungsgemäß wird die Aufgabe nach dem vorgeschlagenen Verfahren nunmehr derart gelöst, dass der Zugmitteltrieb unmittelbar vor dem Startvorgang oder unmittelbar nach dem Abstellen der Brennkraftmaschine durch eine definierte Drehmomenteinleitung in denselben und entgegen seiner Normaldrehrichtung vorpositioniert wird.

Durch diese Maßnahme wird insbesondere in den Leertrum des Zugmittels eine erhöhte Vorspannkraft eingebracht, die ihrerseits vorteilhaft einem herkömmlichen nachteiligen Abfall derselben in diesem Bereich während des Startbetriebs, und demgemäß einer verringerten Übertragung des Drehmoments von der Zugmittelscheibe des Starter-Generators auf die Zugmittelscheiben der übrigen Aggregate, insbesondere der Kurbelwelle der Brennkraftmaschine, vorbeugt.

In besonders vorteilhafter Ausgestaltung dieses Verfahrens ist vorgesehen, dass zur Vorpositionierung des Zugmitteltriebs mittels des Starter-Generators eine Drehbewegung der Zugmittelscheibe desselben entgegen der Normaldrehrichtung des Starter-Generators erzeugt und infolgedessen in den Leertrum des Zugmittels eine erhöhte Zugspannung eingebracht wird, die mit einer elastischen Dehnung des Zugmittels im Bereich des Leertrums einhergeht.

Eine durch die elastische Dehnung des Zugmittels im Bereich des Leertrums bewirkte Verlängerung des Zugmittels im Bereich des Zugtrums wird erfindungsgemäß durch die Spanneinrichtung ausgeglichen.

Dieses bedeutet in der Praxis, dass die durch die elastische Dehnung des Zugmittels im Bereich des Leertrums erzeugte Verlängerung desselben im Bereich des Zugtrums überführt wird und in der Folge die Zugmittelspannvorrichtung in den Zugmitteltrieb eindringt bzw. in diesen hineinschwenkt. Im Anschluss an den Ausgleich der Längenänderung des Zugtrums wird die Spanneinrichtung vorteilhafterweise in diesem Zustand fixiert.

Durch diese Maßnahme kann der aufgebaute Spannungszustand im Leer- und Zugtrum des Zugmittels definiert über einen längeren Zeitraum, also wenigstens bis zum nächsten Startvorgang und darüber hinaus gespeichert werden.

Vorzugsweise sollte jedoch die Fixierung der Spanneinrichtung zumindest nach dem Start der Brennkraftmaschine wieder gelöst werden, da der erhöhte Spannungszustand des Zugmitteltriebs beziehungsweise des Zugmittels sich zwar vorteilhaft während der Startphase auswirkt, jedoch im Normalbetrieb der Antriebsanordnung der Zugmitteltrieb (Zugmittel, Lagerung der Zugmittel- und Umlenkscheiben) in diesem Zustand einem erhöhten Verschleiß unterliegen würde.

Des Weiteren ist zu gewährleisten, dass vorstehende Vorpositionierung des Zugmitteltriebs als Voraussetzung für einen jeden Neustart der Brennkraftmaschine reproduzierbar ist.

Die Vorrichtung zum Vorspannen eines Zugmitteltriebs einer Brennkraftmaschine zeichnet sich gemäß Anspruch 6 insbesondere dadurch aus, dass der Starter-Generator derart ausgebildet ist, dass mit diesem unmittelbar vor dem Startvorgang oder unmittelbar nach dem Abstellen der Brennkraftmaschine eine Drehbewegung der Zugmittelscheibe desselben entgegen der Normaldrehrichtung des Zugmitteltriebs erzeugbar und infolgedessen in den Leertrum des Zugmittels eine erhöhte Zugspannung einbringbar ist, die mit einer elastischen Dehnung des Zugmittels im Bereich des Leertrums einhergeht.

Nach einer ersten bevorzugten Ausführungsform ist der Starter-Generator zur Erzeugung der Drehbewegung der Zugmittelscheibe desselben entgegen der Normaldrehrichtung des Zugmitteltriebs entsprechend ansteuerbar ausgebildet.

Beispielsweise kann der Starter-Generator als Elektromotor durch einfache Umpolung kurzzeitig in eine von der Normaldrehrichtung abweichende entgegengesetzte Drehrichtung drehen und demgemäß eine bestimmte erhöhte Zugspannung auf den Leertrum des Zugmittels aufbringen.

Gemäß einer weiteren möglichen Ausführungsform kann dem Starter-Generator zur Erzeugung der Drehbewegung der Zugmittelscheibe desselben entgegen der Normaldrehrichtung auch ein separater und in die Zugmittelscheibe oder deren Drehachse selbsttätig ein- und auskuppelbarer Antrieb zugeordnet sein.

Denkbar ist es beispielsweise, einen elektrisch betriebenen Linearantrieb mit einem an der Zugmittelscheibe oder der Drehachse derselben angreifenden Hebelsystem vorzusehen, wobei nur entgegen der Normaldrehrichtung der Zugmittelscheibe ein Formschluss zwischen besagtem Antrieb und der Zugmittelscheibe oder der Drehachse derselben realisiert wird, und in Normaldrehrichtung der Zugmittelscheibe sozusagen ein Freilauf realisiert ist.

Wie die Erfindung weiter vorsieht, ist die Spanneinrichtung derart ausgebildet, dass eine durch die elastische Dehnung des Zugmittels im Bereich des Leertrums bewirkte Verlängerung des Zugmittels im Bereich des Zugtrums ausgleichbar ist.

Ferner wird vorgeschlagen, dass der Spanneinrichtung ein Fixiermittel zugeordnet ist, mit dessen Hilfe die Spanneinrichtung im Anschluss an den Ausgleich der Längenänderung des Zugtrums in diesem Zustand fixierbar ist.

Das Fixiermittel kann erfindungsgemäß durch eine mechanische oder elektromechanische Verriegelung, oder durch eine gewählte Dämpfungscharakteristik der Spanneinrichtung gebildet sein.

Schließlich wird vorgeschlagen, dass die Fixierung der Spanneinrichtung lösbar ausgebildet ist.

### Kurze Beschreibung der Zeichnungen

Die Erfindung wird im folgenden anhand der beiliegenden Zeichnungen an einigen Ausführungsformen näher erläutert. Darin zeigt
- Fig. 1: schematisch einen herkömmlichen Zugmitteltrieb einer Brennkraftmaschine und einem Starter-Generator in der Startphase, und
- Fig. 2: einen erfindungsgemäß ausgebildeten Zugmitteltrieb während seiner Vorpositionierung vor dem eigentlichen Startvorgang der Brennkraftmaschine.

### Detaillierte Beschreibung der Zeichnungen

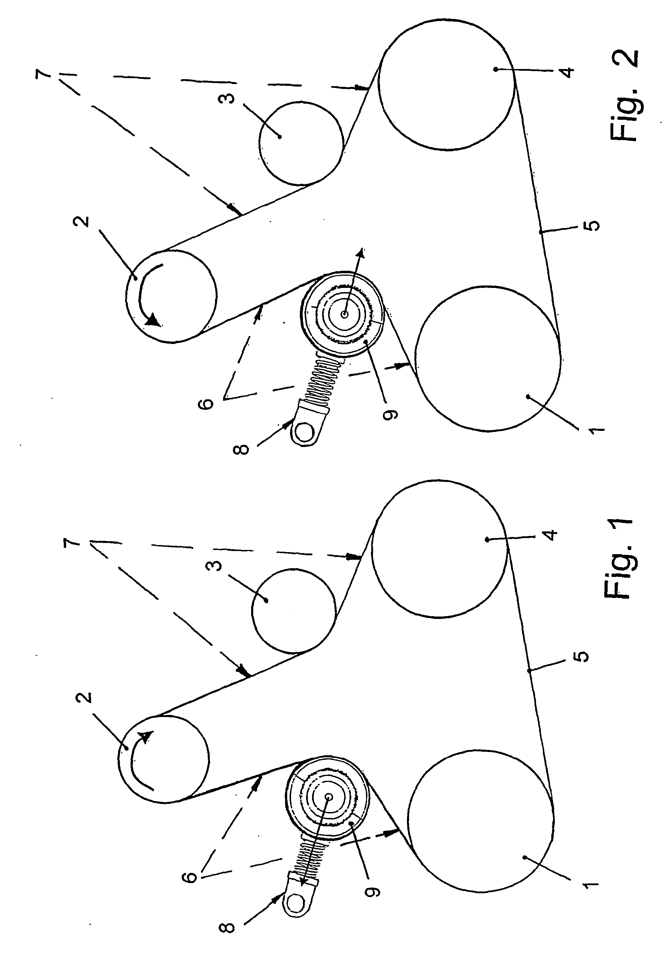

Der in Fig. 1 gezeigte Zugmitteltrieb umfasst eine Zugmittelscheibe 1 einer Kurbelwelle einer Brennkraftmaschine, eine derselben in Normaldrehrichtung (Pfeilrichtung) des Zugmitteltriebs nachgeordnete Zugmittelscheibe 2 eines Starter-Generators, sowie eine Umlenkscheibe 3 und eine Zugmittelscheibe 4 eines Nebenaggregates, wie z. B. eines Klimakompressors.

Sämtliche Zugmittelscheiben 1, 2, 4 sowie die Umlenkscheibe 3 sind über ein Zugmittel 5, vorliegend ein Riemen oder eine Kette, miteinander verbunden.

Gesetzt den Fall, dass sich die Antriebsanordnung in der Startphase bzw. der Starter-Generator im Starterbetrieb befindet, so sind, in Normaldrehrichtung der Zugmittelscheibe 2 (Pfeilrichtung) des Starter-Generators gesehen, bekanntermaßen der der Zugmittelscheibe 2 vorgeordnete Bereich als Zugtrum 6 (der in der Zeichnung links angeordnete Bereich des Zugmittels 5) sowie der der Scheibe 2 nachgeordnete und demgemäß rechts angeordnete Bereich des Zugmittels 5 als Leertrum 7 zu bezeichnen.

Wie aus der Fig. 1 weiter ersichtlich ist, ist im Bereich des genannten Zugtrums 6 eine Spanneinrichtung 8 angeordnet, die ihrerseits als Axialspanner ausgebildet ist und sich einenends an einem nicht näher dargestellten tragenden Bauteil, beispielsweise dem Motorblock abstützt. Anderenends weist die Spanneinrichtung 8 eine federbelastete Spannrolle 9 auf, die sich ihrerseits am Zugmittel 5 abstützt, vorliegend am Zugtrum 6, und eine bestimmte Vorspannkraft auf das Zugmittel 5 aufbringt.

Wirkt der Starter-Generator als Starter, so sind im Zugtrum 6 vergleichsweise hohe Kräfte zu verzeichnen, da beim Starten die Zugmittelscheibe 2 des Starter-Generators die Riemenscheibe 1 der Kurbelwelle und die Riemenscheibe 4 des Aggregates sowie die Umlenkscheibe 3 schleppt. Die so genannten Schleppmomente zum Anschleppen insbesondere der Kurbelwelle sind hierbei sehr hoch. Im Leertrum 7 treten dagegen geringere Kräfte auf. Im Ergebnis ist daher während des Starts des Starter-Generators zum einen ein Abfall der Vorspannkraft im Leertrum 7, und zum anderen ein Ausweichen der Spanneinrichtung 8 nach außen in Pfeilrichtung zu verzeichnen.

Wie bereits oben dargelegt, wirkt sich dieses Verhalten negativ auf die Weiterleitung des durch den Starter-Generator erzeugten Drehmomentes auf die Zugmittelscheiben 1 und 4 der übrigen Aggregate aus. Um diesem zu begegnen, wird erfindungsgemäß der Zugmitteltrieb unmittelbar vor dem Startvorgang oder unmittelbar nach dem Abstellen der Brennkraftmaschine durch eine definierte Drehmomenteinleitung in denselben und entgegen seiner Normaldrehrichtung vorpositioniert.

Wie in Fig. 2 näher gezeigt ist, wird dazu beispielsweise mittels des Starter-Generators kurzzeitig eine Drehbewegung der Zugmittelscheibe 2 desselben entgegen der Normaldrehrichtung erzeugt; vorliegend demgemäß eine Drehbewegung entgegen dem Uhrzeigersinn (Pfeilrichtung).

Der Starter-Generator ist gemäß einer bevorzugten Ausführungsform entsprechend ansteuerbar, indem dieser beispielsweise während der Startphase oder unmittelbar nach dem Abstellen der Brennkraftmaschine eine kurzzeitige Umpolung der Energieanschlüsse erfährt und somit als Elektromotor entgegen seiner üblichen Drehrichtung dreht. In der nachfolgenden Startphase wird die ursprüngliche Polung der Energieanschlüsse wieder hergestellt und der Starter-Generator kann die Brennkraftmaschine bestimmungsgemäß antreiben.

Ebenso ist es denkbar und wird durch die Erfindung mit erfasst, dass dem Starter-Generator zur Erzeugung der Drehbewegung der Zugmittelscheibe 2 desselben entgegen der Normaldrehrichtung ein separater und an die Zugmittelscheibe 2 oder deren Drehachse selbsttätig ein- und auskuppelbarer Antrieb zugeordnet ist (nicht näher dargestellt).

So kann beispielsweise ein elektrisch betriebener Linearantrieb mit einem an der Zugmittelscheibe oder deren Drehachse angreifendem Hebelsystem vorgesehen sein, der entgegen der Normaldrehrichtung der Zugmittelscheibe 2 einen Formschluss zwischen dem besagten Antrieb und der Zugmittelscheibe 2 oder deren Drehachse sowie eine kurzzeitige Drehbewegung entgegen der Normaldrehrichtung realisiert und in Normaldrehrichtung der Zugmittelscheibe 2 einen Freilauf aufweist.

Durch vorstehende Maßnahmen kann vorteilhaft in den Leertrum 7 des Zugmittels 5 eine erhöhte Zugspannung eingebracht werden, die ihrerseits mit einer elastischen Dehnung des Zugmittels 5 im Bereich des Leertrums 7 einhergeht.

Die elastische Dehnung des Zugmittels 5 im Bereich des Leertrums 7 bewirkt ihrerseits eine Längung des Zugtrums 6, also des vorliegend in der Zeichnung links angeordneten Bereiches des Zugmittels 5. Diese Längung des Zugtrums 6 wird durch die Spanneinrichtung 8 ausgeglichen, indem diese in Pfeilrichtung auf das Zugmittel 5 wirkt und dabei in den Zugmitteltrieb eindringt.

In diesem Zustand, der seinerseits insbesondere durch eine erhöhte Zugspannung im Leertrum 7 gekennzeichnet ist, ist es angezeigt die Spanneinrichtung 8 zu fixieren, um die erzeugte Vorspannung des Zugmitteltriebs beziehungsweise des Zugmittels 5 definiert über einen längeren Zeitraum aufrechtzuerhalten. Als Fixiermittel bieten sich bekannte und demgemäss nicht näher dargestellte mechanische oder elektromechanische Verriegelungen an.

Ebenso ist es denkbar, die Dämpfungscharakteristik der Spanneinrichtung 8 derart zu wählen beziehungsweise einzustellen, dass eine entsprechende Fixierung des beschriebenen Zustandes gewährleistet ist.

Gesetzt den Fall, die Brennkraftmaschine soll neu gestartet werden, so wird der Starter-Generator zunächst als Elektromotor bzw. als Starter betrieben, der seinerseits die Brennkraftmaschine in Gang setzen soll. Dreht der Starter-Generator bzw. dessen Zugmittelscheibe 2 in Normaldrehrichtung, ist einem nachteiligen Abfall der Vorspannkraft im Leertrum 7 nunmehr vorgebeugt, da sich die Spanneinrichtung 8 noch im fixierten Zustand befindet, wodurch eine erhöhte Zugspannung im Zugmittel 5 gewährleistet ist.

Um einem erhöhten Verschleiß des Zugmitteltriebs vorzubeugen ist es angezeigt, zumindest nach dem Start der Brennkraftmaschine die Fixierung der Spanneinrichtung 8 wieder zu lösen, wodurch sich der herkömmliche und ausreichende Spannungszustand des Zugmittels 5 für den Normalbetrieb erneut einstellt. Des Weiteren ist dadurch die Reproduzierbarkeit der erfindungsgemäßen Vorpositionierung des Zugmitteltriebs als Voraussetzung eines jeden Neustarts der Brennkraftmaschine gewährleistet.

Vorstehendes Ausführungsbeispiel stellt auf eine Spanneinrichtung 8 in Form eines Linearspanners ab. Selbstverständlich können auch andere, an sich bekannte Spanneinrichtungen 8 erfindungsgemäß zur Anwendung kommen, beispielsweise so genannte Pendelspanner gemäß DE 100 45 143 A1, wodurch vorteilhaft eine Entlastung der Hebelarme durch eine Reduzierung der Kraftspitzen zu verzeichnen ist.

### Bezugszeichen

- 1: Zugmittelscheibe (Kurbelwelle)
- 2: Zugmittelscheibe (Starter-Generator)
- 3: Umlenkscheibe
- 4: Zugmittelscheibe (Nebenaggregat)
- 5: Zugmittel
- 6: Zugtrum
- 7: Leertrum
- 8: Spanneinrichtung
- 9: Spannrolle

## Patentansprüche

1. Verfahren zum Vorspannen eines Zugmitteltriebs einer Brennkraftmaschine, mit einem zumindest die Zugmittelscheibe (1) einer Kurbelwelle und die Zugmittelscheibe (2) eines Starter-Generators verbindenden Zugmittel (5), sowie mit einer auf den Zugtrum (6) des Zugmittels (5) einwirkenden Spanneinrichtung (8), wobei bei einem angenommenen Starterbetrieb des Starter-Generators als Zugtrum (6) der Bereich des Zugmittels (5) verstanden wird, welcher in Normaldrehrichtung der Zugmittelscheibe (2) des Starter-Generators gesehen der Zugmittelscheibe (2) vorgelagert und als Leertrum (7) derjenige Bereich des Zugmittels (5) verstanden wird, welcher der Zugmittelscheibe (2) des Starter-Generators nachgeordnet ist, **dadurch gekennzeichnet, dass** der Zugmitteltrieb unmittelbar vor dem Startvorgang oder unmittelbar nach dem Abstellen der Brennkraftmaschine durch eine definierte Drehmomenteinleitung in denselben und entgegen seiner Normaldrehrichtung vorpositioniert wird.

2. Verfahren nach Anspruch 1, **dadurch gekennzeichnet, dass** zur Vorpositionierung des Zugmitteltriebs mittels des Starter-Generators eine Drehbewegung der Zugmittelscheibe (2) desselben entgegen der Normaldrehrichtung erzeugt und infolgedessen in den Leertrum (7) des Zugmittels (5) eine erhöhte Zugspannung eingebracht wird, die mit einer elastischen Dehnung des Zugmittels (5) im Bereich des Leertrums (7) einhergeht.

3. Verfahren nach einem der Ansprüche 1 und 2, **dadurch gekennzeichnet, dass** eine durch die elastische Dehnung des Zugmittels (5) im Bereich des Leertrums (7) bewirkte Längung des Zugmittels (5) im Bereich des Zugtrums (6) durch die Spanneinrichtung (8) ausgeglichen wird.

4. Verfahren nach Anspruch 3, **dadurch gekennzeichnet, dass** die Spanneinrichtung (8) im Anschluss an den Ausgleich der Längenänderung des Zugtrums (6) in diesem Zustand fixiert wird.

5. Verfahren nach Anspruch 4, **dadurch gekennzeichnet, dass** die Fixierung der Spanneinrichtung (8) zumindest nach dem Start der Brennkraftmaschine wieder gelöst wird.

6. Vorrichtung zum Vorspannen eines Zugmitteltriebs einer Brennkraftmaschine, mit einem zumindest die Zugmittelscheibe (1) einer Kurbelwelle und die Zugmittelscheibe (2) eines Starter-Generators verbindenden Zugmittel (5), und mit einer auf den Zugtrum (6) des Zugmittels (5) einwirkenden Spanneinrichtung (8), wobei bei einem angenommenen Starterbetrieb des Starter-Generators als Zugtrum (6) derjenige Bereich des Zugmittels (5) verstanden wird, welcher in Normaldrehrichtung der Zugmittelscheibe (2) des Starter-Generators gesehen der Zugmittelscheibe (2) vorgeordnet ist, und als Leertrum (7) der Bereich des Zugmittels (5) definiert ist, welcher der Zugmittelscheibe (2) nachgeordnet ist, **dadurch gekennzeichnet, dass** der Starter-Generator derart:ausgebildet ist, dass mit diesem unmittelbar vor dem Startvorgang oder unmittelbar nach dem Abstellen der Brennkraftmaschine eine Drehbewegung der Zugmittelscheibe (2) desselben entgegen der Normaldrehrichtung des Zugmitteltriebs erzeugbar und infolgedessen in den Leertrum (7) des Zugmittels (5) eine erhöhte Zugspannung einbringbar ist, die mit einer elastischen Dehnung des Zugmittels (5) im Bereich des Leertrums (7) einhergeht.

7. Vorrichtung nach Anspruch 6, **dadurch gekennzeichnet, dass** der Starter-Generator zur Erzeugung der Drehbewegung der Zugmittelscheibe (2) desselben entgegen der Normaldrehrichtung entsprechend ansteuerbar ausgebildet ist.

8. Vorrichtung nach Anspruch 6, **dadurch gekennzeichnet, dass** an dem Starter-Generator zur Erzeugung der Drehbewegung der Zugmittelscheibe (2) desselben entgegen der Normaldrehrichtung ein separater und an die Zugmittelscheibe (2) oder deren Drehachse selbsttätig ein-und auskuppelbarer Antrieb zugeordnet ist.

9. Vorrichtung nach einem der Ansprüche 6 bis 8, **dadurch gekennzeichnet, dass** die Spanneinrichtung (8) derart ausgebildet ist, dass eine durch die elastische Dehnung des Zugmittels (5) im Bereich des Leertrums (7) bewirkte Verlängerung des Zugmittels (5) im Bereich des Zugtrums (6) ausgleichbar ist.

10. Vorrichtung nach einem der Ansprüche 6 bis 9, **dadurch gekennzeichnet, dass** der Spanneinrichtung (8) ein Fixiermittel zugeordnet ist, mit dessen Hilfe die Spanneinrichtung (8) im Anschluss an den Ausgleich der Längenänderung des Zugtrums (6) in diesem Zustand fixierbar ist.

11. Vorrichtung nach Anspruch 10, **dadurch gekennzeichnet, dass** das Fixiermittel durch eine mechanische oder elektromechanische Verriegelung, oder durch eine gewählte Dämpfungscharakteristik der Spanneinrichtung (8) gebildet ist.

12. Vorrichtung nach einem der Ansprüche 10 und 11, **dadurch gekennzeichnet, dass** die Fixierung der Spanneinrichtung (8) lösbar ausgebildet ist.

## Claims

1. Method for pretensioning a belt drive of an internal combustion engine, having a belt (5) which connects at least the belt pulley (1) of a crankshaft and the belt pulley (2) of a starter generator, and having a tensioning device (8) which acts on the traction side (6) of the belt (5), wherein, when a starter operation of the starter generator is assumed, the area of the belt (5) which is located in front of the belt pulley (2) viewed in the normal direction of rotation of the belt pulley (2) of the starter generator is understood to be the traction side (6), and the area of the belt (5) which is arranged after the belt pulley (2) of the starter generator is understood to be the slack side (7), **characterized in that** directly before the starting process or directly after the switching off of the internal combustion engine the belt drive is prepositioned counter to its normal rotational direction by means of a defined rotary torque initiation in said belt drive.

2. Method according to Claim 1, **characterized in that,** in order to preposition the belt drive by means of the starter generator, a rotational movement of the belt pulley (2) of said belt drive is produced counter to the normal rotational direction, and as a result of this an increased tension is introduced into the slack side (7) of the belt (5), which increased tension is accompanied by elastic stretching of the belt (5) in the region of the slack side (7).

3. Method according to one of Claims 1 and 2, **characterized in that** lengthening of the belt (5) which is brought about in the region of the slack side (7) as a result of the elastic stretching of the belt (5) is compensated in the region of the traction side (6) by the tensioning device (8).

4. Method according to Claim 3, **characterized in that,** subsequent to the compensation of the change in length of the traction side (6), the tensioning device (8) is secured in this state.

5. Method according to Claim 4, **characterized in that** the securing of the tensioning device (8) is released again at least after the start of the internal combustion engine.

6. Device for pretensioning a belt drive of an internal combustion engine, having a belt (5) which connects at least the belt pulley (1) of a crankshaft and the belt pulley (2) of a starter generator, and having a tensioning device (8) which acts on the traction side (6) of the belt (5), wherein, when a starter operation of the starter generator is assumed, the area of the belt (5) which is located in front of the belt pulley (2) viewed in the normal direction of rotation of the belt pulley (2) of the starter generator is understood to be the traction side (6), and the area of the belt (5) which is arranged after the belt pulley (2) is defined as the slack side (7) **characterized in that** the starter generator is embodied in such a way that directly before the starting process or directly after the switching off of the internal combustion engine, said starter generator can be used to bring about a rotational movement of the belt pulley (2) of said starter generator counter to the normal rotational direction of the belt drive, and as a result of this an increased tension can be introduced into the slack side (7) of the belt (5), which increased tension is accompanied by elastic stretching of the belt (5) in the region of the slack side (7).

7. Device according to Claim 6, **characterized in that,** in order to generate the rotational movement of the belt pulley (2) of the starter generator, said starter generator is designed so as to be capable of being actuated accordingly counter to the normal rotational direction.

8. Device according to Claim 6, **characterized in that** a separate drive, which can be automatically engaged on the belt pulley (2) or its rotational axis and decoupled therefrom is disposed on the starter generator for generating the rotational movement of the belt pulley (2) of said starter generator counter to the normal rotational direction.

9. Device according to one of Claims 6 to 8, **characterized in that** the tensioning device (8) is embodied in such a way that prolongation of the belt (5) which is brought about by the elastic stretching of the belt (5) in the region of the slack side (7) can be compensated in the region of the traction side (6).

10. Device according to one of Claims 6 to 9, **characterized in that** the tensioning device (8) is assigned a securing means which can be used, subsequent to the compensation of the change in length of the traction side (6), to secure the tensioning device (8) in this state.

11. Device according to Claim 10, **characterized in that** the securing means is formed by a mechanical or electromechanical lock or by a selected damping characteristic of the tensioning device (8).

12. Device according to one of Claims 10 and 11, **characterized in that** the securing of the tensioning device (8) is embodied in such a way that it can be released.

## Revendications

1. Procédé pour précontraindre un mécanisme à éléments de traction d'un moteur à combustion interne comprenant un élément de traction (5) reliant au moins le disque de l'élément de traction (1) d'un vilebrequin et le disque de l'élément de traction (2) d'un générateur de démarrage, ainsi qu'un dispositif de tensionnement (8) agissant sur le tronçon de traction (6) de l'élément de traction (5), le tronçon de traction (6), en supposant un fonctionnement de démarreur du générateur de démarrage, étant considéré comme la région de l'élément de traction (5) qui, dans le sens de rotation normal du disque de l'élément de traction (2) du générateur de démarrage est disposée avant le disque de l'élément de traction (2) et le tronçon vide (7) étant considéré comme la région de l'élément de traction (5) qui est disposée après le disque de l'élément de traction (2) du générateur de démarrage, **caractérisé en ce que** le mécanisme à éléments de traction est prépositionné directement avant l'opération de démarrage ou directement après l'arrêt du moteur à combustion interne par une introduction de couple définie dans celui-ci et à l'encontre de son sens de rotation normal.

2. Procédé selon la revendication 1, **caractérisé en ce que** pour le prépositionnement du mécanisme à éléments de traction au moyen du générateur de démarrage, on produit un mouvement de rotation de son disque de l'élément de traction (2) à l'encontre du sens de rotation normal, et de ce fait une tension de traction plus importante est introduite dans le tronçon vide (7) de l'élément de traction (5), laquelle est associée à un étirement élastique de l'élément de traction (5) dans la région du tronçon vide (7).

3. Procédé selon l'une quelconque des revendications 1 et 2, **caractérisé en ce qu'**un allongement de l'élément de traction (5) dans la région du tronçon de traction (6) provoqué par l'étirement élastique de l'élément de traction (5) dans la région du tronçon vide (7) est compensé par le dispositif de tensionnement (8).

4. Procédé selon la revendication 3, **caractérisé en ce que** le dispositif de tensionnement (8), à la suite de la compensation de la variation de longueur du tronçon de traction (6), est fixé dans cet état.

5. Procédé selon la revendication 4, **caractérisé en ce que** la fixation du dispositif de tensionnement (8) est à nouveau desserrée au moins après le démarrage du moteur à combustion interne.

6. Dispositif pour précontraindre un mécanisme à éléments de traction d'un moteur à combustion interne comprenant un élément de traction (5) reliant au moins le disque de l'élément de traction (1) d'un vilebrequin et le disque de l'élément de traction (2) d'un générateur de démarrage, ainsi qu'un dispositif de tensionnement (8) agissant sur le tronçon de traction (6) de l'élément de traction (5), le tronçon de traction (6), en supposant un fonctionnement de démarreur du générateur de démarrage, étant considéré comme la région de l'élément de traction (5) qui, dans le sens de rotation normal du disque de l'élément de traction (2) du générateur de démarrage est disposée avant le disque de l'élément de traction (2) et le tronçon vide (7) étant considéré comme la région de l'élément de traction (5) qui est disposée après le disque de l'élément de traction (2) du générateur de démarrage, **caractérisé en ce que** le générateur de démarrage est réalisé de telle sorte que l'on puisse produire avec lui, directement avant l'opération de démarrage ou directement après l'arrêt du moteur à combustion interne, un mouvement de rotation de son disque de l'élément de traction (2) à l'encontre du sens de rotation normal du mécanisme à éléments de traction et que de ce fait une tension de traction plus importante puisse être introduite dans le tronçon vide (7) de l'élément de traction (5), laquelle est associée à un étirement élastique de l'élément de traction (5) dans la région du tronçon vide (7).

7. Dispositif selon la revendication 6, **caractérisé en ce que** le générateur de démarrage est réalisé de manière à pouvoir être commandé de manière correspondante pour produire le mouvement de rotation de son disque de l'élément de traction (2) à l'encontre du sens de rotation normal.

8. Dispositif selon la revendication 6, **caractérisé en ce que** l'on associe, sur le générateur de démarrage pour produire le mouvement de rotation de son disque de l'élément de traction (2) à l'encontre du sens de rotation normal, un entraînement séparé, embrayable et désembrayable automatiquement sur le disque de l'élément de traction (2) ou son axe de rotation.

9. Dispositif selon l'une quelconque des revendications 6 à 8, **caractérisé en ce que** le dispositif de tensionnement (8) est réalisé de telle sorte qu'un prolongement de l'élément de traction (5) dans la région du tronçon de traction (6), provoqué par l'étirement élastique de l'élément de traction (5) dans la région du tronçon vide (7), puisse être compensé.

10. Dispositif selon l'une quelconque des revendications 6 à 9, **caractérisé en ce que** le dispositif de tensionnement (8) est associé à un moyen de fixation à l'aide duquel le dispositif de tensionnement (8), à la suite de la compensation de la variation de longueur du tronçon de traction (6), peut être fixé dans cet état.

11. Dispositif selon la revendication 10, **caractérisé en ce que** le moyen de fixation est formé par un verrouillage mécanique ou électromécanique, ou par une caractéristique d'amortissement sélectionnée du dispositif de tensionnement (8).

12. Dispositif selon l'une quelconque des revendications 10 et 11, **caractérisé en ce que** la fixation du dispositif de tensionnement (8) est réalisée de manière desserrable.
